# EUROPÄISCHE PATENTSCHRIFT

(11) **EP 1 541 386 B1**
(45) Veröffentlichungstag und Bekanntmachung des Hinweises auf die Patenterteilung: **01.02.2012**
(21) Anmeldenummer: 04029448.0
(22) Anmeldetag: 13.12.2004
(51) Int. Cl.: B60G 11/27, B60G 11/28, B60G 17/052

(54) **Kraftfahrzeug-Luftfeder**
Air spring for a motor vehicle
Ressort pneumatique pour un véhicule automobile

(30) Priorität: 12.12.2003 DE 10358792
(43) Veröffentlichungstag der Anmeldung: 15.06.2005
(73) Patentinhaber: Carl Freudenberg KG, 69469 Weinheim (DE)
(72) Erfinder: Klatt, Christopher, 69118 Heidelberg (DE); Berg, Jürgen, 22885 Barsbüttel (DE)
(74) Vertreter: Ripper, Monika Sigrid

(56) Entgegenhaltungen:
- EP-A- 0 828 087
- DE-A1- 4 413 559
- DE-A1- 10 130 507

## Beschreibung

### Technisches Gebiet

Die Erfindung betrifft eine Luftfeder umfassend einen Abrollkolben und einen, einen Luftinnenraum bildenden Rollbalg mit einer Abrollfalte, der an der Wand des Abrollkolbens abrollbar ist sowie zumindest ein flächig ausgebildetes Sensorelement, welches bei der Abrollbewegung des Rollbalgs betätigbar ist und ein höhenabhängiges Signal erzeugt.

### Stand der Technik

Eine derartige Luftfeder ist aus der DE 101 30 507 A1 bekannt. Die vorbekannte Luftfeder wird zur Federung der Achse eines Kraftfahrzeugs verwendet. Im Wesentlichen besteht die Luftfeder aus einem Abrollkolben und einem Rollbalg der an dem Abrollkolben abrollt. Bei einer Fahrzeugfederung mittels Luftfedern ist eine Niveauregelung notwendig, um eine konstante Höhe des Fahrzeugs zu gewährleisten. Diese Niveauregelung kann über Sensoren erfolgen, die in die Luftfeder integriert sind. Die Sensoren sind an der Außenseite des Abrollkolbens angeordnet und ermitteln die Eintauchtiefe des Rollbalgs. Die Luftfeder ist durch die Anordnung im Bereich der Fahrzeugachse starken mechanischen Einflüssen, wie beispielsweise Steinschlag ausgesetzt. Die Sensoren werden vor den mechanischen Einflüssen durch Einbetten in eine elastomere Beschichtung geschützt die außenumfangsseitig am Abrollkolben angebracht ist.

Durch die EP 0 828 087 A1 ist auch ein Luftfedersystem bekannt, bei dem ein Höhensensor zwischen dem Rollbalg und dem Abrollkolben bzw. innerhalb des Rollbalgs und/oder Abrollkolben angeordnet ist. Bei dem System wird ein Sensor verwendet, der aus einem Sender und einem Zielgerät besteht. Sender und Zielgerät sind jeweils mit einem eigenen Computer und einer eigenen Stromquelle verbunden. Der Höhensensor kann hier bei entsprechender Anordnung vor äußeren Einflüssen geschützt werden, jedoch ist das System aufwändig in der Herstellung und Komposition.

Als weiterer Stand der Techniks ist noch die DE 44 13 559 A1 zu nennen, bei dem die Balgwand der Luftfeder mindestens einen elektrischen leitfähigen metallischen Leiter aufweist, dessen Enden aus dem Luftfederbalg zu elektrischen Anschlüssen geführt sind. Dabei ist der Leiter parallel zur Fadenrichtung der Gewebelage von einem Balgende zum anderen Balgende geführt. An die elektrischen Anschlüsse ist eine als Oszillatorkreis wirkende Messeinrichtung angeschlossen, bei dem der Leiter als Spule dient. Die mit dieser Einrichtung erreichbaren Signale sind abhängig von der Bewegung des Abrollkolbens in Bezug zur gegebenen Lage des Leiters und geben bei einer Taubelbewegung des Kolbens kein sicheres Höhensignal.

### Darstellung der Erfindung

Der Erfindung liegt die Aufgabe zugrunde, die vorbekannte Luftfeder derart weiterzuentwickeln, dass sie kostengünstig und einfach herstellbar ist und besser vor äußeren Einflüssen geschützt ist. Auch sollen die durch Nick- und Taumelbewegungen verfälschten Messergebnisse eliminiert werden.

Diese Aufgabe wird erfindungsgemäß mit den Merkmalen der Ansprüche 1,2 und 4 gelöst.

Zur Lösung der Aufgabe ist das Sensorelement in die Wand des Abrollkolbens integriert oder auf der dem Hohlraum des Abrollkolbens zugewandten Seite der Wand angeordnet, bzw. auf der dem Luftinenraum zugewandten Seite der Wandung des Rollbalgs angebracht.

Durch die Integration des Sensorelements in die Wand des Abrollkolbens ist das Sensorelement vor äußeren Einflüssen, wie Steinschlag und Feuchtigkeit, geschützt. Da das Sensorelement in die Wand des Abrollkolbens integriert oder auf der dem Hohlraum zugewandten Seite der Wand angeordnet ist, erfolgt der Schutz des Sensorelements direkt durch den Abrollkolben, der gegenüber mechanischen Einflüssen sehr robust ist. Ein gesondert anzubringender Schutz ist nicht erforderlich und das Sensorelement ist verschleiß- und wartungsfrei angeordnet. Durch die Integration in den Abrollkolben weist die Luftfeder einen einfachen Aufbau mit wenigen Bauteilen auf, wodurch die Anzahl der Fertigungsschritte reduziert wird und die Luftfeder kostengünstig herstellbar ist. Die Anordnung des Sensorelements auf der dem Hohlraum zugewandten Seite des Abrollkolbens ist besonders preiswert. Die Anordnung des Sensorelements innerhalb der Wand bietet einen besonders guten Schutz des Sensorelements vor Beschädigung.

Die Aufgabe wird außerdem durch eine Luftfeder gelöst, bei der das Sensorelement auf der dem Luftinnenraum zugewandten Seite der Wandung des Rollbalgs angeordnet ist.

Das Sensorelement ist dadurch vor mechanischen Beschädigungen, beispielsweise durch Steinschlag, und vor Feuchtigkeit geschützt. Das Sensorelement kann mit einfachen und preiswerten Mitteln, beispielsweise einer Klebeverbindung, auf der dem Luftinnenraum zugewandten Seite des Rollbalgs befestigt werden.

Das auf der Wandung des Rollbalgs angeordnete Sensorelement kann als biegesensible Folie ausgebildet sein. Mit der biegesensiblen Folie kann die Stelle der Abrollfalte des Rollbalgs ermittelt werden, aus der wiederum die Eintauchtiefe des Abrollkolbens ermittelt wird.

Erfindungsgemäß sind mehrere Sensorelemente vorgesehen die am Umfang des Abrollkolbens oder des Rollbalgs verteilt angeordnet sind. Jedes Sensorelement erfasst die Eintauchtiefe des Abrollkolbens. Durch Beschleunigungen, Verzögerungen und das Einwirken von Bodenunebenheiten bewegt sich der Abrollkolben nicht nur senkrecht zum Rollbalg, sondern führt auch Nick- und Taumelbewegungen aus. Bei Anordnung mehrerer Sensorelement, die über dem Umfangs des Abrollkolbens oder des Rollbalgs angeordnet sind, können die Nick- und Taumelbewegung des Abrollkolbens erfasst werden.

Erfindungsgemäß ist eine integrierte Schaltung vorgesehen , die aus den Signalen der einzelnen Sensorelemente eine mittlere Eintauchtiefe des Abrollkolbens ermittelt. Aus den ermittelten Nick- und Taumelbewegungen kann mit der integrierten Schaltung die mittlere Eintauchtiefe bestimmt werden, die für die konstante Niveauregelung eines Fahrzeugs notwendig ist.

Der Abrollkolben kann aus einem Kunststoff-Spritzguss gebildet sein. Bauteile aus Kunststoff-Spritzguss sind einfach und kostengünstig herstellbar. Der Werkstoff ist preiswert. Es sind komplizierte Formgebungen möglich. Die Integration des Sensorelements ist bei einem Abrollkolben aus Kunststoff-Spritzguss besonders einfach. In einer anderen Ausgestaltung kann der Abrollkolben aus Aluminium gebildet sein. Aluminium ist ein leichter und stabiler Werkstoff und kann im Spritzguss verarbeitet werden. In einer weiteren Ausgestaltung kann der Abrollkolben aus Stahl gefertigt sein. Abrollkolben aus Stahl können aufgrund der Festigkeit von Stahl sehr dünnwandig ausgeführt werden.

Das Sensorelement kann mit dem Werkstoff der Wand umspritzt sein. Dabei wird das Sensorelement während des Spritzgießens in der Form angeordnet und wird beim Spritzgießen vollständig mit Kunststoff umschlossen. Das Sensorelement ist dadurch vor Beschädigungen geschützt und verschleiß- und wartungsfrei im Abrollkolben angeordnet.

Die Wand kann aus zwei Wandteilen gebildet sein und das Sensorelement kann zwischen den zwei Wandteilen angeordnet sein. Das ermöglicht die Verwendung von hitzeempfindlichen Sensoren, die nicht durch Kunststoff-Spritzguss in den Abrollkolben integriert werden können.

### Kurzbeschreibung der Zeichnungen

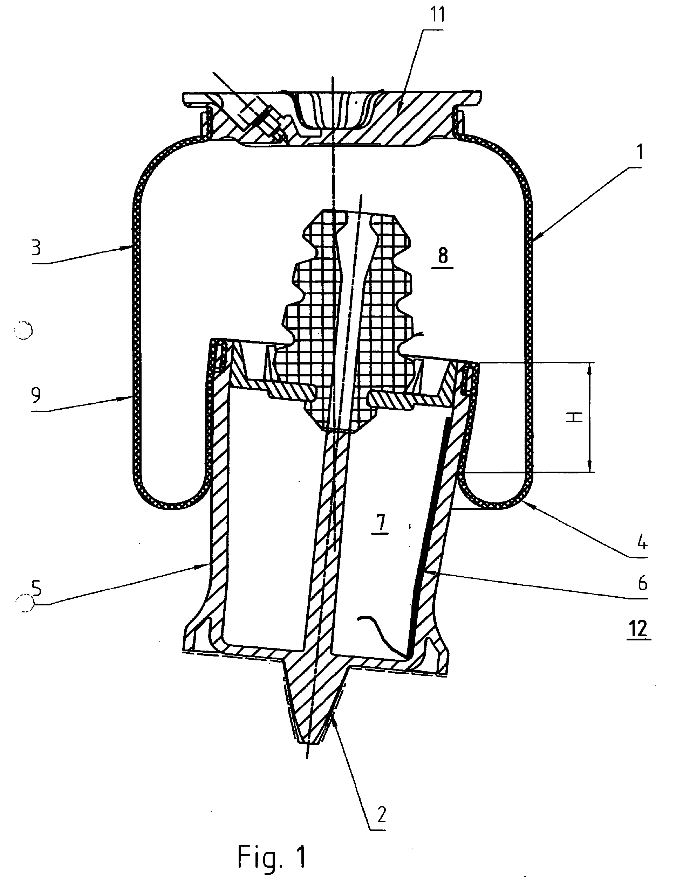

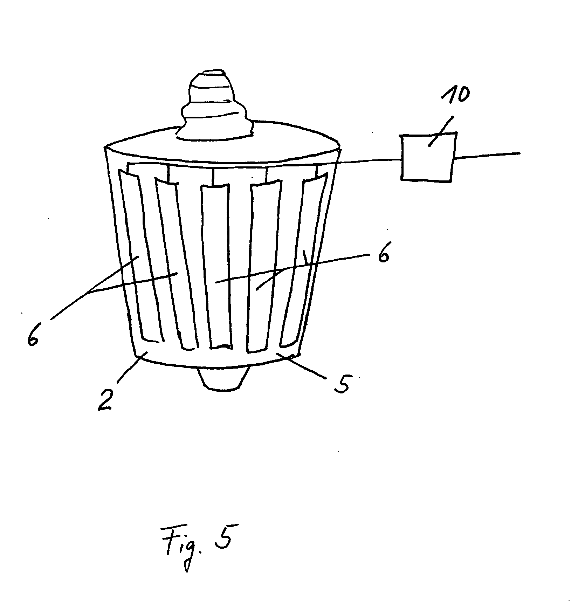

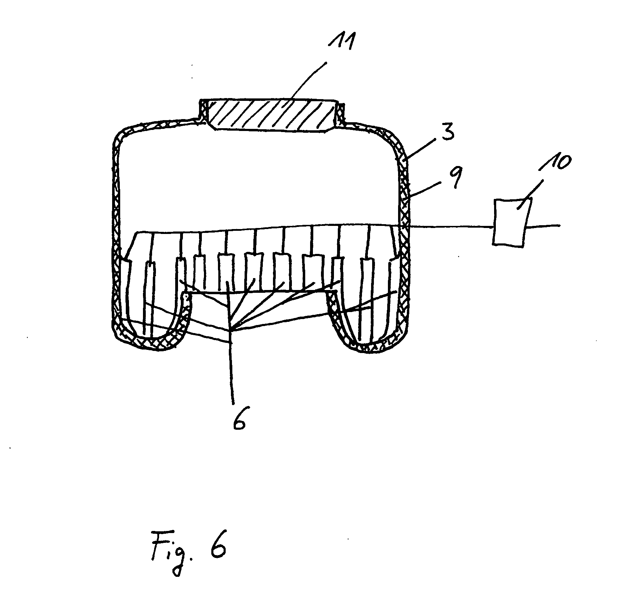

Einige Ausführungsbeispiele der erfindungsgemäßen Luftfeder werden nachfolgend anhand der Figuren 5 und 6 näher erläutert. Die nicht unter den Wortlauf der Ansprüche 1-4 fallenden Ausführungsformen der Figuren 1-4 dienen dem besseren Verständnis der Ausführungsformen der Figuren 5 und 6. Es zeigen, jeweils in schematischer Darstellung:
- Fig. 1: eine Luftfeder mit einem auf der dem Hohlraum zugewandten Seite der Wand des Abrollkolbens angeordneten Sensorelement;
- Fig. 2: eine Luftfeder mit einem in die Wand des Abrollkolbens integrierten Sensorelement;
- Fig. 3: eine Luftfeder gemäß Fig. 2 mit einer zweiteiligen Wand;
- Fig. 4: eine Luftfeder mit einem auf der dem Luftinnenraum zugewandten Seite des Rollbalgs angeordneten Sensorelement;
- Fig. 5: einen Abrollkolben mit mehreren über dem Umfang verteilten Sensorelementen gemäß der Erfindung;
- Fig.6: einen Rollbalg mit mehreren über den Umfang verteilten Sensorelementen gemäß der Erfindung.

### Ausführung der Erfindung

Figur 1 zeigt eine Luftfeder 1 mit einem Abrollkolben 2, einen mit vertikalem Abstand oberhalb des Abrollkolbens 2 angeordneten Luftfederdeckel 11, einen Rollbalg 3 mit einer Abrollfalte 4 aus elastomerem Werkstoff, der den Luftfederdeckel 11 und den Abrollkolben 2 miteinander verbindet und unter Bildung eines volumenelastischen Luftinnenraums 8 an der Wand 5 des Abrollkolbens 2 abrollbar ist. Der Abrollkolben 2 ist aus Kunststoff-Spritzguss gebildet. Alternativ kann der Abrollkolben auch aus Aluminium oder Stahl gebildet sein. Auf der dem Hohlraum 7 des Abrollkolbens 2 zugewandten Seite der Wand 5 ist ein Sensorelement 6 zur Höhenstandserfassung der Luftfeder 1 angeordnet. Das Sensorelement 6 besteht aus einer dehnungssensiblen Folie und erfasst Spannungsänderungen der Wand 5, die durch die Abrollbewegung des Rollbalgs 3 an der Wand 5 resultieren. Das Sensorelement 6 erfasst insbesondere die Dehnungsverteilung des Abrollkolbens 2 in vertikaler Richtung. Der Hohlraum 7 des Abrollkolbens 2 ist mit dem Luftinnenraum 8 hydraulisch verbunden, daher herrscht im Hohlraum 7 der gleiche Druck wie im Luftinnenraum 8. Der Bereich der Wand 5, der durch den Rollbalg 3 verdeckt ist, ist aufgrund der fehlenden Druckdifferenz spannungsfrei. In dem Bereich der Wand 5 der nicht durch den Rollbalg 3 verdeckt ist, verursacht die Druckdifferenz zwischen Hohlraum 5 und Umgebung 12 eine Spannung in der Wand 5 die durch das Sensorelement 6 erfasst wird. Das Maß der Überdeckung des Rollbalgs 3 entspricht der Eintauchtiefe H. Eine Änderung des Höhenstands bedingt eine spezifische Veränderung des Dehnungsmaximums und der Dehnungsverteilung in vertikaler Richtung in der Wandung des Abrollkolbens 2, die durch das Sensorelement erfasst wird. Zu diesem Zweck kann es in ein oder mehrere Segmente unterteilt sein. Da das Sensorelement 6 einen hohen Verstärkungsfaktor aufweist, werden auch geringe Spannungsänderungen der Wand 5 erfasst. Anhand der gemessenen Eintauchtiefe H erfolgt die Höhenstandsregulierung der Luftfeder. Durch eine Höhenstandsregulierung aller mit einer Luftfeder 1 gefederten Achsen wird eine Niveauregulierung eines Kraftfahrzeugs ermöglicht.

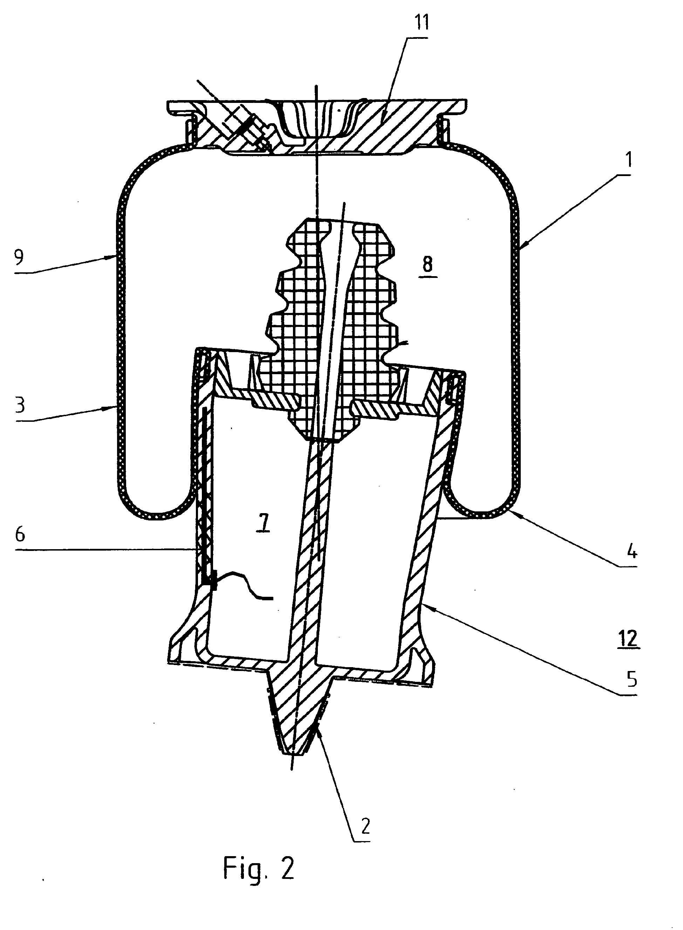

Figur 2 zeigt eine Luftfeder mit einem Aufbau gemäß Figur 1. Das Sensorelement 6 ist allerdings im Unterschied zu Figur 1 in die Wand 5 des Abrollkolbens 2 integriert. Der Abrollkolben 2 ist aus Kunststoff-Spritzguss hergestellt. Das Sensorelement 6 wird bei der Herstellung des Abrollkolbens 2 in der Spritzguss-Form angeordnet und mit Kunststoff umspritzt. Dadurch ist das Sensorelement 6 vollständig mit Kunststoff umschlossen und ist gegenüber der Umgebung 12 und dem Hohlraum 7 gekapselt. Der Kontakt des Sensorelements 6 zur Wand 5 ist durch die direkte Verbindung jederzeit wartungsfrei und verschleißfrei gewährleistet. Das Sensorelement 6 besteht wie in dem Beispiel aus Figur 1 aus einer drucksensiblen Folie und erfasst Spannungsänderungen der Wand 5, die durch die Abrollbewegung des Rollbalgs 3 an der Wand 5 resultieren.

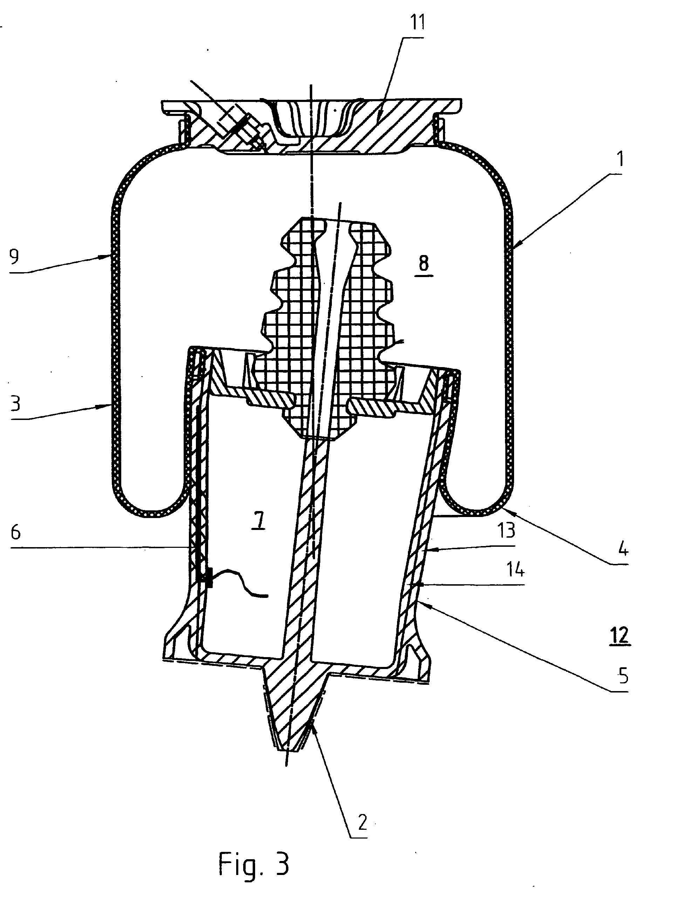

Figur 3 zeigt eine Luftfeder gemäß Figur 2. Die Wand 5 ist in diesem Ausführungsbeispiel zweiteilig aufgebaut. Die Wand wird durch die beiden Wandteile 13, 14 gebildet. Das Sensorelement 6 ist zwischen den beiden Wandteilen 13, 14 angeordnet.

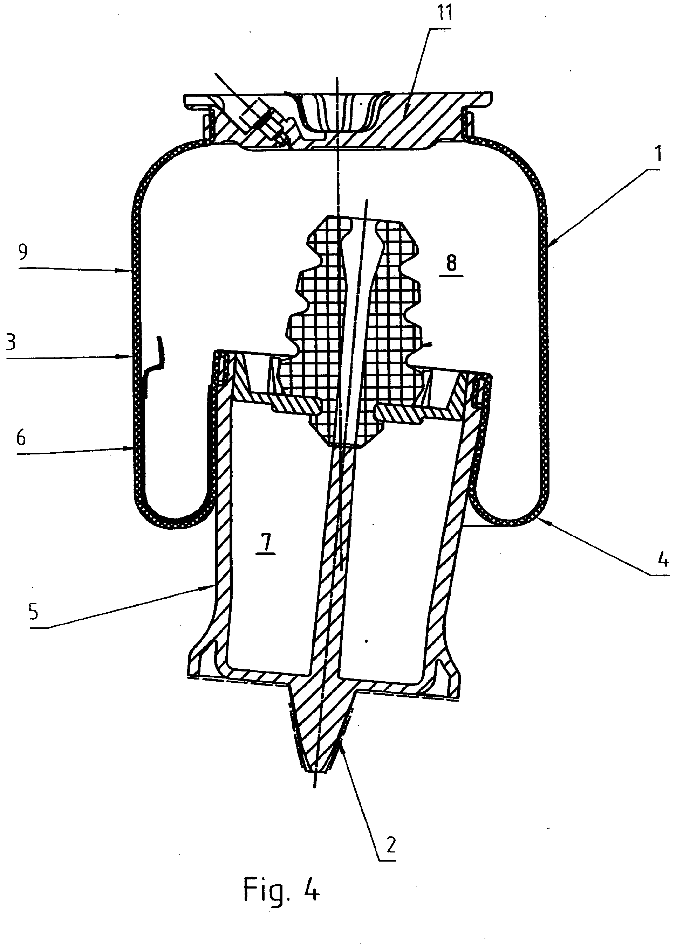

Figur 4 zeigt eine Luftfeder 1 bestehend aus einem Abrollkolben 2 aus Kunststoff-Spritzguss, einen mit vertikalem Abstand oberhalb des Abrollkolbens 2 angeordneten Luftfederdeckel 11, einen Rollbalg 3 mit einer Abrollfalte 4 aus elastomerem Werkstoff, der den Luftfederdeckel 11 und den Abrollkolben 2 miteinander verbindet und unter Bildung eines volumenelastischen Luftinnenraums 8 an der Wand 5 des Abrollkolbens 2 abrollbar ist. Das Sensorelement 6 ist auf der dem Luftinnenraum 8 zugewandten Seite der Wandung 9 des Rollbalgs 3 mittels einer Klebeverbindung befestigt. Das Sensorelement 6 ist als biegesensible Folie ausgebildet. Das Sensorelement 6 erfasst die Position der Abrollfalte 4 auf dem Rollbalg 3 bzw. davon verursachte Dehnungen des Abrollkolbens 2. Diese bildet ein Maß für die Eintauchtiefe H des Abrollkolbens 2. Anhand der gemessenen Eintauchtiefe H erfolgt die Höhenstandsregulierung der Luftfeder 1. Durch eine Höhenstandsregulierung aller mit einer Luftfeder 1 gefederten Achsen wird eine Niveauregulierung eines Kraftfahrzeugs ermöglicht.

Der Abrollkolben 2 führt neben der senkrechten Eintauchbewegung auch Nickund Taumelbewegungen um eine Drehachse innerhalb des Abrollkolbens 2 durch. Die Nick- und Taumelbewegungen entstehen durch Beschleunigungsund Verzögerungsvorgänge sowie durch Erschütterungen der Luftfeder 1. Ist nur ein Sensorelement 6 vorgesehen, würden diese Nick- und Taumelbewegungen zu einem verfälschten Messergebnis führen. Durch mehrere über dem Umfang verteilt angeordnete Sensorelemente 6 kann eine mittlere Eintauchtiefe ermittelt werden und die Nick- und Taumelbewegungen können eliminiert werden.

Figur 5 zeigt, erfindungsgemäß, einen Abrollkolben 2 mit mehreren um den Umfang des Abrollkolbens 2 verteilt angeordneten Sensorelementen 6. Die Sensorelemente 6 können in die Wand 5 integriert oder auf der Innenseite der Wand 5 befestigt sein. Die Sensorelemente sind als drucksensible Folien ausgebildet und können noch vertikal unterteilt sein. Die Sensorelemente 6 sind mit einer integrierten Schaltung 10 verbunden. An jeden Sensorelement 6 wird jeweils eine Eintauchtiefe erfasst. Die Messwerte der einzelnen Sensorelemente 6 werden an eine integrierten Schaltung 10 übermittelt, wo aus den einzelnen Messwerten eine mittlere Eintauchtiefe des Abrollkolbens 2 errechnet wird.

Figur 6 zeigt, erfindungsgemäß, einen Rollbalg 3 mit Luftfederdeckel 11 mit mehreren um den Umfang des Rollbalgs 3 verteilt angeordneten Sensorelementen 6, die an der Wandung 9 auf der dem Luftinnenraum 8 zugewandten Seite aufgeklebt sind. Die Sensorelemente 6 sind als biegesensible Folien ausgebildet. Die Sensorelemente 6 sind mit einer integrierten Schaltung 10 verbunden. Jedes Sensorelement 6 erfasst jeweils eine Eintauchtiefe. Die Messwerte der einzelnen Sensorelemente 6 werden an eine integrierten Schaltung 10 übermittelt, wo aus den einzelnen Messwerten eine mittlere Eintauchtiefe des Abrollkolbens 2 errechnet wird.

## Patentansprüche

1. Luftfeder (1) umfassend einen Abrollkolben (2) und einen, einen Luftinnenraum (8) bildenden Rollbalg (3) mit einer Abrollfalte (4), der an der Wand (5) des Abrollkolbens (2) abrollbar ist sowie zumindest ein flächig ausgebildetes Sensorelement (6), welches bei der Abrollbewegung des Rollbalgs (3) betätigbar ist und ein höhenabhängiges Signal erzeugt,
**dadurch gekennzeichnet,**
**dass** als zumindest ein Sensorelement, mehrere, in die Wand (5) des Abrollkolbens (2) integrierte, Sensorelemente (6) vorgesehen sind, die als drucksensible Folien ausgebildet und am Umfang des Abrollkolbens (2) verteilt angeordnet sowie vertikal ausgerichtet sind,
und **dass** eine integrierte Schaltung (10) mit den Sensorelementen verbunden ist, die aus den Signalen der Eintauchtiefe der einzelnen Sensorelemente (6) eine mittlere Eintauchtiefe des Abrollkolbens (2) ermittelt.

2. Luftfeder (1), umfassend einen Abrollkolben (2) und einen, einen Luftinnenraum (8) bildenden Rollbalg (3) mit einer Abrollfalte (4), der an
der Wand (5) des Abrollkolbens (2) abrollbar ist sowie zumindest ein flächig ausgebildetes Sensorelement (6), welches bei der Abrollbewegung des Rollbalgs (3) betätigbar ist und ein höhenabhängiges Signal erzeugt,
**dadurch gekennzeichnet,**
**dass** als zumindest ein Sensorelement, mehrere, auf der dem Hohlraum (7) des Abrollkolbens (2) zugewandten Seite der Wand (5) des Abrollkolbens angeordnete, Sensorelemente (6) vorgesehen sind, die als drucksensible Folien ausgebildet und am Umfang des Abrollkolbens (2) verteilt angeordnet sowie vertikal ausgerichtet sind,
und **dass** eine integrierte Schaltung (10) mit den Sensorelementen verbunden ist, die aus den Signalen der Eintauchtiefe der einzelnen Sensorelemente (6) eine mittlere Eintauchtiefe des Abrollkolbens (2) ermittelt.

3. Luftfeder nach Anspruch 1 oder 2, **dadurch gekennzeichnet, dass** die Sensorelemente (6) vertikal unterteilt sind.

4. Luftfeder (1), umfassend einen Abrollkolben (2) und einen, einen Luftinnenraum (8) bildenden, Rollbalg (3) mit einer Abrollfalte (4), der an der Wand (5) des Abrollkolbens (2) abrollbar ist sowie zumindest ein flächig ausgebildetes Sensorelement (6), welches bei der Abrollbewegung des Rollbalgs (3) betätigbar ist und ein höhenabhängiges Signal erzeugt,
**dadurch gekennzeichnet,**
**dass**, als zumindest ein Sensorelement, mehrere, auf der dem Luftinnenraum (8) zugewandten Seite der Wandung (9) des Rollbalgs (3) aufgeklebte, Sensorelemente (6) vorgesehen sind, die als biegesensible Folien ausgebildet und am Umfang des Rollbalgs (3) verteilt angeordnet sowie vertikal ausgerichtet sind,
und **dass** eine integrierte Schaltung (10) mit den Sensorelementen verbunden ist, die aus den Signalen der Eintauchtiefe der einzelnen Sensorelemente (6) eine mittlere Eintauchtiefe des Abrollkolbens (2) ermittelt.

## Claims

1. Airspring (1) comprising a rolling piston (2) and a rolling bellows (3) which forms an air interior space (8), has a rolling fold (4) and can be rolled on the wall (5) of the rolling piston (2), as well as at least one sensor element (6) which is of planar design and can be actuated during the rolling movement of the rolling bellows (3), and generates a height-dependent signal,
**characterized**
**in that** a plurality of sensor elements (6), which are integrated into the wall (5) of the rolling piston (2), are provided as at least one sensor element, said sensor element (6) being embodied as pressure-sensitive films, being arranged distributed over the circumference of the rolling piston (2) and being oriented vertically,
and **in that** an integrated circuit (10) is connected to the sensor elements and determines an average immersion depth of the rolling piston (2) from the signals of the immersion depth of the individual sensor elements (6).

2. Airspring (1) comprising a rolling piston (2) and a rolling bellows (3) which forms an air interior space (8), has a rolling fold (4) and can be rolled on the wall (5) of the rolling piston (2), as well as at least one sensor element (6) which is of planar design and can be actuated during the
rolling movement of the rolling bellows (3), and generates a height-dependent signal,
**characterized**
**in that** a plurality of sensor elements (6), which are arranged on the side of the wall (5) of the rolling piston facing the cavity (7) of the rolling piston (2), are provided as at least one sensor element, said sensor elements (6) being embodied as pressure-sensitive films, being arranged and distributed over the circumference of the rolling piston (2) and being oriented vertically,
and **in that** an integrated circuit (10) is connected to the sensor elements and determines an average immersion depth of the rolling piston (2) from the signals of the immersion depth of the individual sensor elements (6).

3. Airspring according to Claim 1 or 2, **characterized in that** the sensor elements (6) are divided vertically.

4. Airspring (1) comprising a rolling piston (2) and a rolling bellows (3) which forms an air interior space (8), has a rolling fold (4) and can be rolled on the wall (5) of the rolling piston (2), as well as at least one sensor element (6) which is of planar design and can be actuated during the rolling movement of the rolling bellows (3), and generates a height-dependent signal,
**characterized**
**in that** a plurality of sensor elements (6), which are bonded onto the side of the wall (9) of the rolling bellows (3) facing the air interior space (8), are provided as at least one sensor element, said sensor elements (6) being embodied as films which are sensitive to bending, are arranged distributed over the circumference of the rolling bellows (3) and are oriented vertically,
and **in that** an integrated circuit (10) is connected to the sensor elements and determines an average immersion depth of the rolling piston (2) from the signals of the immersion depth of the individual sensor elements (6).

## Revendications

1. Ressort pneumatique (1) comprenant un piston de déroulement (2) et un soufflet roulant (3) formant une chambre pneumatique (8) avec un pli de déroulement (4), pouvant être déroulé au niveau de la paroi (5) du piston de déroulement (2) ainsi qu'au moins un élément de détection (6) de forme plate pouvant être actionné par un mouvement de déroulement du soufflet roulant (3) et produisant un signal dépendant de la hauteur ; **caractérisé en ce que** :
l'au moins un élément de détection prend la forme de plusieurs éléments de détection (6) intégrés dans la paroi (5) du piston de déroulement (2), ceux-ci prenant la forme de films sensibles à la pression et étant répartis au niveau de la périphérie du piston de déroulement (2) et orientés verticalement ;
et qu'un circuit intégré (10) est relié aux éléments de détection et que ce circuit calcule une profondeur d'immersion moyenne du piston de déroulement (2) à partir des signaux relatifs à la profondeur d'immersion des éléments de détection (6) individuels.

2. Ressort pneumatique (1), comprenant un piston de déroulement (2) et un soufflet roulant (3) formant une chambre pneumatique (8) avec un pli de déroulement (4) pouvant être déroulé au niveau de la paroi (5) du piston de déroulement (2) ainsi qu'au moins un élément de détection (6) de forme plate pouvant être actionné par le mouvement de déroulement du soufflet roulant (3) et produisant un signal dépendant de la hauteur, **caractérisé en ce que** :
l'au moins un élément de détection prend la forme de plusieurs éléments de détection (6) disposés sur le côté de la paroi (5) du piston de déroulement qui est orienté vers la chambre (7) du piston de déroulement (2), lesdits éléments étant constitués de films sensibles à la pression et étant répartis au niveau de la périphérie du piston de déroulement (2) ainsi qu'orientés verticalement ;
et qu'un circuit intégré (10) est relié aux éléments de détection et que ce circuit calcule une profondeur d'immersion du piston de déroulement (2) à partir des signaux relatifs à la profondeur d'immersion des éléments de détection (6) individuels.

3. Ressort pneumatique selon la revendication 1 ou 2, **caractérisé en ce que** les éléments de détection (6) sont sectorisés verticalement.

4. Ressort pneumatique (1), comprenant un piston de déroulement (2) et un soufflet roulant (3) formant une chambre pneumatique (8) avec un pli de déroulement (4) pouvant être déroulé au niveau de la paroi (5) du piston de déroulement (2) ainsi qu'au moins un élément de détection (6) de forme plate pouvant être actionné par le mouvement de déroulement du soufflet roulant (3) et produisant un signal dépendant de la hauteur, **caractérisé en ce que** :
l'au moins un élément de détection prend la forme de plusieurs éléments de détection (6) collés sur le côté de la paroi (9) du soufflet roulant (3) qui est orienté vers la chambre pneumatique (8), lesdits éléments étant réalisés sous la forme de films sensibles à la flexion et étant répartis au niveau de la périphérie du soufflet roulant (3) ainsi qu'orientés verticalement ;
et qu'un circuit intégré (10) est relié aux éléments de détection, ledit circuit calculant une profondeur d'immersion moyenne du piston de déroulement (2) à partir des signaux relatifs à la profondeur d'immersion des éléments de détection (6) individuels.
